(19) **Europäisches Patentamt / European Patent Office / Office européen des brevets**

(11) **EP 4 449 085 B1**

(12) **FASCICULE DE BREVET EUROPEEN**

(45) Date de publication et mention de la délivrance du brevet:
**22.04.2026   Bulletin 2026/17**

(21) Numéro de dépôt: **22823126.2**

(22) Date de dépôt: **16.12.2022**

(51) Classification Internationale des Brevets (IPC):
**G01M 3/26** *(2006.01)*

(52) Classification Coopérative des Brevets (CPC):
**G01M 3/26**

(86) Numéro de dépôt international:
**PCT/EP2022/086500**

(87) Numéro de publication internationale:
**WO 2023/111334 (22.06.2023 Gazette 2023/25)**

(54) **MÉTHODE ET SYSTÈME DE DÉTECTION DE FUITES**

VERFAHREN UND SYSTEM ZUR LECKERKENNUNG

METHOD AND SYSTEM FOR DETECTING LEAKS

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité:   **17.12.2021   FR 2113884**

(43) Date de publication de la demande:
**23.10.2024   Bulletin 2024/43**

(73) Titulaire: **ATEQ**
**78340 Les Clayes-sous-Bois (FR)**

(72) Inventeur: **REGEF, Jean-Luc**
**78340 Les Clayes-sous-Bois (FR)**

(74) Mandataire: **Vidon Brevets & Stratégie**
**16B, rue de Jouanet**
**BP 90333**
**35703 Rennes Cedex 7 (FR)**

(56) Documents cités:
**EP-A1- 2 801 716**        **WO-A1-2010/134622**
**DE-A1- 102015 226 360**  **US-A1- 2017 254 719**
**US-B1- 6 182 501**

• **MOLLER E B ET AL: "A simplified method using compressed air to determine air leakage", THERMAL PERFORMANCE OF THE EXTERIOR ENVELOPES OF WHOLE BUILDINGS (12TH INTERNATIONAL CONFERENCE ON THERMAL PERFORMANCE OF THE EXTERIOR ENVELOPES OF WHOLE BUILDINGS; 20131201 TO 20131205; SHERATON SAND KEY RESORT IN CLEARWATER BEACH CLEARWATER FL), US, 1 January 2013 (2013-01-01), pages 1 - 11, XP008177421, ISBN: 978-1-933742-89-2**

EP 4 449 085 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention se rapporte au domaine des méthodes de détection de fuites pour le contrôle de l'étanchéité d'un objet, et plus particulièrement aux méthodes de détection de fuites par variation de pression. La présente invention se rapporte également aux dispositifs de détection de fuites configurés pour mettre en œuvre de telles méthodes.

On connait différents systèmes et méthodes pour détecter des fuites, par exemple les gaz traceurs, la méthode de la bulle de savon, etc. Dans le cas présent, l'invention concerne plus particulièrement la détection de fuites par variation de pression.

Ainsi, lorsqu'on souhaite détecter une fuite par variation de pression, l'objet à tester, dont on veut contrôler le niveau d'étanchéité, subit une variation de pression maitrisée. Cela signifie notamment qu'on fait subir une variation de pression connue à un volume donné interne à l'objet (dite méthode directe) ou à un volume fermé entourant ledit objet (dite méthode indirecte).

Puis, après un temps déterminé, il y a mesure de la variation de pression dans un volume caractéristique durant un intervalle de temps prédéfini, afin de déterminer si l'objet présente une fuite, et également parfois pour pouvoir quantifier le niveau de la fuite de l'objet testé.

En effet, une fuite se traduit par une variation de pression pendant une période de temps donnée, plus particulièrement la variation de pression par unité de temps peut par exemple être reliée à un niveau de fuite par la relation mathématique suivante : $F = k \dfrac{\Delta P}{\Delta t} V$

dans laquelle, F est la fuite généralement exprimée en centimètres cubes standard par minute (ou scm³/min), $\Delta P$ est la variation de pression en Pascal (Pa) mesurée dans un volume pertinent, $\Delta t$ l'intervalle de temps (en secondes) de la variation de pression mesurée $\Delta P$, V le volume pertinent à considérer (par exemple le volume interne de l'objet) généralement exprimé en centimètres cubes (cm³), et k une constante multiplicative (en Pa⁻¹). On notera que la fuite peut aussi s'exprimer d'autres manières, par exemple sous forme d'un débit massique. La formule qui relie la fuite à une grandeur physique peut prendre différentes formes selon la méthode de mesure utilisée et la grandeur physique étudiée.

Ainsi, quel que soit l'objet ou sous-élément de l'objet, il est possible de vérifier si celui-ci présente des fuites et de déterminer son niveau d'étanchéité.

L'objet à tester peut-être un appareil électronique, un emballage, un contenant, etc.

Les tolérances sur le niveau d'étanchéité (ou de fuite) peuvent donc être très variables d'autres manières, par exemple sous forme d'un débit massique. La formule qui relie la fuite à une grandeur physique peut prendre différentes formes selon la méthode de mesure utilisée et la grandeur physique étudiée.

Ainsi, quel que soit l'objet ou sous-élément de l'objet, il est possible de vérifier si celui-ci présente des fuites et de déterminer son niveau d'étanchéité.

L'objet à tester peut-être un appareil électronique, un emballage, un contenant, etc. Les tolérances sur le niveau d'étanchéité (ou de fuite) peuvent donc être très variables au regard de l'objet à tester, de son volume, de sa forme et/ou de sa fonction.

Cependant, lors d'un test d'étanchéité d'un objet, les paramètres environnementaux et/ou des phénomènes parasites temporaires et divers peuvent rendre difficile la mesure de la variation de pression dans le temps et/ou la répétabilité de telles mesures.

Ce problème est d'autant plus marqué lorsque la détection de fuites s'effectue dans un environnement industriel, tel qu'une usine, c'est-à-dire un environnement où la température et la pression peuvent varier localement et/ou dans le temps en fonction des opérations réalisées sur les objets à tester ou à proximité du dispositif de détection de fuites. De plus, le dispositif de détection peut être destiné à tester l'étanchéité d'objets sur une ligne de production ou de fabrication. Dans ce cas-là, il est nécessaire que le contrôle d'étanchéité soit le plus rapide, exact et répétable possible de sorte à ne pas désorganiser la ligne de production ou de fabrication.

D'autres solutions telles que celles décrites dans les documents de brevets publiés sous les numéros US 2017/254719, EP 2 801 716, US 6 182 501, WO 2010/134622, DE 10 2015 226360 ou dans la publication de MOLLER sous le numéro ISBN : 978-1-933742-89-2, ne donnent pas satisfaction non plus pour remédier à l'une au moins des problématiques évoquées précédemment.

La présente invention se propose de remédier au moins à l'une des problématiques évoquées précédemment en proposant une nouvelle méthode de détection de fuites sur un objet par variation de la pression au moyen d'un dispositif de détection de fuites selon la revendication 1, ladite méthode comportant les étapes suivantes :

- relier l'objet à tester au dispositif de détection de fuites ;
- faire varier la pression dans au moins une partie de l'objet testé ou dans une enceinte entourant l'objet à tester ;
- mesurer, dans une étape de test, une grandeur physique liée au niveau de fuite F dans ladite au moins une partie de l'objet testé ou dans une enceinte entourant l'objet à tester, cette mesure correspondant à un signal de mesure M(t) ;
- appliquer une fonction de modélisation A(t) contenant au moins une composante pertinent, ladite composante exponentielle. Plus particulièrement, la fonction d'approximation peut se présenter sous forme d'une série du type $\displaystyle\sum_{n=0}^{+\infty} \frac{1}{n!} \left(\frac{-t}{\tau}\right)^{n}$, où

n est un entier naturel. Le développement de ce type de série se faisant à l'ordre 2, 3 ou delà en fonction du degré d'erreur acceptable (sur l'approximation réalisée).

Selon une caractéristique possible, il y a calcul des valeurs des composantes de la fonction de modélisation A(t).

Le calcul des valeurs des composantes de la fonction de modélisation peut notamment être réalisé lors de l'étape de test à partir de signaux de mesure M(t).

Selon une autre caractéristique possible, la fonction de modélisation A(t) est une fonction continue et dérivable, au moins par morceaux. Avantageusement, la fonction est dérivable n fois, avec n qui est entier positif compris entre 1 et 3.

Selon une autre caractéristique possible, la fonction de modélisation A(t) comprend au moins une composante du type $Ce^{-t/\tau}$, où C est une constante réelle.

Selon une autre caractéristique possible et non couverte par les revendications, lorsque le signal de mesure M(t) est homogène à une pression, la fonction de modélisation A(t) est de la forme :

$$A(t) = P_i + \left( Ce^{-\frac{t}{\tau}} - 1 \right) - Ft$$

où $P_i$ est la valeur de la pression initiale, C est une constante réelle, F le niveau de fuite de l'objet testé.

Selon une autre caractéristique possible, lorsque le signal de mesure M(t) est homogène à une pression, le niveau de fuite F de l'objet testé est égal à

$$\frac{C(e^{-t_1/\tau} - 1) + P_i - M(t_1)}{t_1}$$

, où $t_1$ est un temps quelconque lors de l'étape de test.

Selon une autre caractéristique possible et non couverte par les revendications, lorsque le signal de mesure M(t) est homogène à une pression il y a détermination des composantes de la fonction de modélisation A(t) par variation par rapport au temps du signal de mesure M(t) à des temps successifs $\frac{t_0 + t_1}{2}$ et $t_1$ et par le calcul d'un rapport $R(t_1)$ desdites variations, où $t_0$ est un temps initial lors de l'étape de test et $t_1$ est un temps ultérieur à $t_0$, et

$$R(t_1) = \frac{M'(t_1) - M'(t_0)}{M'\left(\frac{t_0 + t_1}{2}\right) - M'(t_0)}$$

Avantageusement, l'écart entre les temps $t_0$ et $t_1$ est supérieur à 500 ms (pour millisecondes), et préférentiellement à 1000 ms.

Selon une autre caractéristique possible, le niveau de fuite F de l'objet testé est égal à

$$M'(t) - \frac{(M''(t))^2}{M'''(t)}$$

Selon l'invention telle que revendiquée, lorsque le signal de mesure M(t) est homogène à un débit ou à une pression par unité de temps, la fonction de modélisation A(t) est de la forme : $A(t) = Ce^{-\frac{t}{\tau}} + F$ où C est une constante réelle et F le niveau de fuite de l'objet testé.

Selon l'invention telle que revendiquée, lorsque le signal de mesure M(t) est homogène à un débit ou à une pression par unité de temps, le niveau de fuite F de l'objet testé est égal à $\frac{M(t_1)}{C} e^{t_1/\tau}$

Selon une autre caractéristique possible, lorsque le signal de mesure est homogène à un débit ou à une pression par unité de temps, il y a détermination des composantes de la fonction de modélisation A(t) par l'intermédiaire du signal de mesure M(t) à des temps successifs $\frac{t_0 + t_1}{2}$ et $t_1$ et par le calcul d'un rapport R'(t_1), où $t_0$ est un temps initial lors de l'étape de test et $t_1$ est un temps ultérieur à $t_0$, et

$$R'(t_1) = \frac{M(t_1) - M(t_0)}{M\left(\frac{t_0 + t_1}{2}\right) - M(t_0)}$$

Avantageusement, l'écart entre les temps $t_0$ et $t_1$ est supérieur à 500 ms (ms pour millisecondes), et préférentiellement à 1000 ms. L'écart de temps est généralement fonction du volume de l'objet testé, la pression de test et/ou du niveau de fuite recherché. Plus particulièrement, plus le volume est grand, plus la pression de test est élevée et/ou plus le niveau de fuite recherché est petit, alors plus l'écart entre les temps est grand.

Selon une autre caractéristique possible, le niveau de fuite F de l'objet testé est égal à

$$M(t) - \frac{(M'(t))^2}{M''(t)}$$

Selon une autre caractéristique possible, la détermination du niveau de fuite F est fonction du rapport de variations par rapport au temps, telles que des dérivées, du signal de mesure M(t).

Selon une autre caractéristique possible, la détermination d'un niveau fuite F est fonction du signal de mesure M(t), des dérivées première, seconde et/ou troisième, respectivement notées M'(t), M"(t) et M'''(t), du signal de mesure M(t).

Selon une autre caractéristique possible, la valeur du niveau de fuite F est la moyenne de plusieurs valeurs du signal de mesure M(t) et/ou de ses variations par rapport au temps (telles que des dérivées ou autres).

Ainsi, afin de rendre plus robuste la détermination du niveau de fuite F, la fonction de modélisation A(t) est appliquée à plusieurs intervalles de temps, consécutifs ou non, du signal de mesure M(t).

Selon une autre caractéristique possible, les valeurs des composantes $\tau$ et C de la fonction de modélisation A(t) sont calculées au préalable ou sont prédéterminées, puis mémorisées pour être utilisées lors la détermination du niveau de fuite.

Dans le cas où l'objet testé est toujours le même, il peut être avantageux de prédéterminer des valeurs moyennes pour certaines composantes de la fonction de modélisation A(t), ceci afin d'améliorer la rapidité du contrôle d'étanchéité. On notera également qu'il est avantageux de prédéterminer les valeurs des composantes $\tau$ et C au moyen d'une base de données de mesures passées et de méthodes d'apprentissage, d'optimisation et/ou de régression sur de telles bases de données.

Selon une autre caractéristique possible, ladite fonction de modélisation A(t) est déterminée pour une période prédéterminée de temps $\Delta t$, avantageusement pour une période de temps $\Delta t$ comprise entre 500 et 4000 millisecondes (ms).

L'acquisition du signal de mesure M(t) (et donc la détection de fuites) peut être réalisée sur des durées allant de 100 millisecondes et 650 secondes, on peut ainsi déterminer plusieurs fonctions d'ajustement A(t) successives ou de manière glissante, afin de moyenner et/ou de pouvoir vérifier plusieurs fois les composantes de la fonction de modélisation A(t), ainsi que le niveau de fuite F.

L'invention se rapporte également à un dispositif de détection de fuites selon la revendication 11 configuré pour mettre en œuvre la méthode de détection de fuites selon l'invention telle que définie précédemment.

Selon une autre caractéristique possible, le dispositif de détection de fuites est un dispositif de détection de fuites par variation de pression.

L'invention sera mieux comprise, et d'autres buts, détails, caractéristiques et avantages de celles-ci apparaîtront plus clairement au cours de la description suivante de modes de réalisation particuliers de l'invention, donnée uniquement à titre illustratif et non limitatif, en référence aux dessins annexés, sur lesquels :

- la [Fig.1], référencée [Fig.1], est une représentation très schématique d'un dispositif de détection de fuite selon l'invention ;
- la [Fig.2], référencée [Fig.2], est un graphique illustrant un exemple de la variation de la pression au cours d'une procédure de détection de fuite réalisée par le dispositif de la [Fig.1] ;
- la [Fig.3], référencée [Fig.3], est un logigramme illustrant la méthode de détection de fuites selon l'invention.

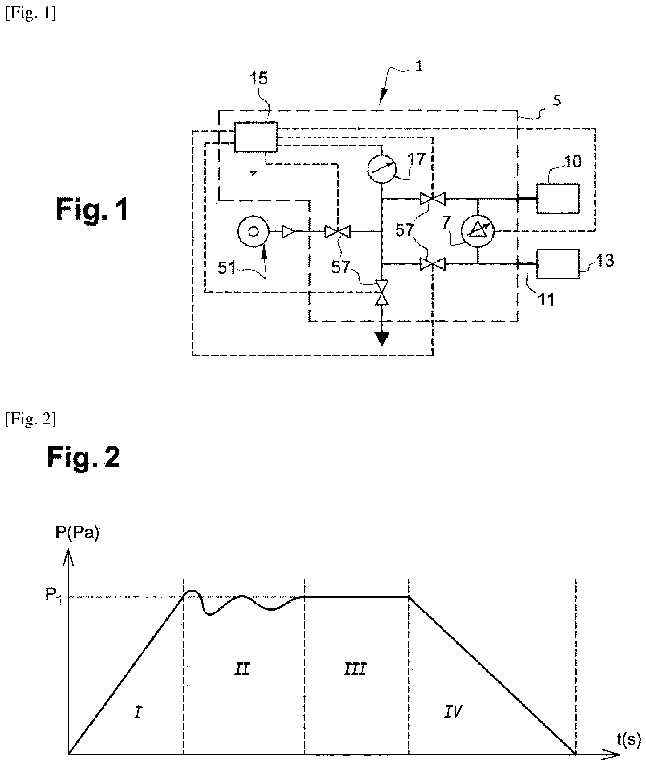

La [Fig.1] est ainsi une représentation très schématique d'un dispositif 1 de détection de fuites pour contrôler l'étanchéité d'un objet 10. L'objet testé peut être n'importe quel objet dont l'étanchéité doit être contrôlée, emballage, échangeur de chaleur, téléphone portable, etc.

Ledit dispositif 1 comprend ainsi :

- un système 5 de mise sous pression ou sous vide d'un volume caractéristique relatif à l'objet 10 testé, c'est-à-dire que cela peut être un volume interne à l'objet (méthode directe) ou un volume fermé entourant ledit objet (méthode indirecte) ;
- un premier capteur de pression 7 configuré pour mesurer les variations de pression dudit volume caractéristique ledit capteur 7 permettant de contrôler l'étanchéité de l'objet 10 ;
- un deuxième capteur de pression 17, qui est un capteur facultatif, configuré pour mesurer la pression appliquée dans ledit volume caractéristique par ledit dispositif 5 ;
- des connexions aérauliques 11, telles que des conduits ou tuyaux, configurées pour relier le dispositif 5 de mise sous pression à l'objet 10 et à une référence 13 ;
- une entité électronique 15, telle qu'un circuit électronique, reliée aux différents capteurs 7 et 17 de pression et configurée pour récupérer les valeurs de pression mesurées par lesdits capteurs 7 et 17.

De manière avantageuse, le système 5 de mise sous pression ou de mise sous vide comprend une source de pression 51 qui peut être par exemple une pompe, un compresseur, une alimentation en air comprimé ou en gaz sous pression.

On notera que dans un mode réalisation non représenté, ledit dispositif 1 comprend un troisième capteur de pression configuré pour mesurer les variations de pression de l'environnement, généralement la pression atmosphérique.

Le premier capteur 7 de pression est préférentiellement un capteur de pression différentielle. Tandis que les deuxième 17 et/ou troisième capteurs sont avantageusement des capteurs de pression absolue. Dans une variante de réalisation non représentée, le premier capteur 7 de pression est un capteur de pression absolue, et le dispositif de détection de fuites ne comporte pas de référence 13.

Une détection de fuites opérée par le dispositif 1 de la [Fig.1] peut être scindée en quatre grandes phases, plus particulièrement illustrée à la [Fig.2] :

- une phase de remplissage I du volume caractéristique de l'objet testé par de l'air comprimé (ou un gaz quelconque, de préférence inerte, tel que du diazote), la pression augmentant jusqu'à une valeur de pression P1 souhaitée ;
- une phase de stabilisation II, après avoir mis le volume caractéristique de l'objet testé sous pression, il est nécessaire que celui-ci revienne à l'équilibre thermique et mécanique généralement pendant une durée prédéfinie, appelée également temps de stabilisation, ceci afin de limiter les perturbations de la mesure de la fuite par des phénomènes transitoires ;

- une phase de test III, pendant laquelle il y a mesure de la variation de pression pendant un temps $t_{test}$, dit temps de test, dans le volume caractéristique pour déterminer un niveau de fuite de l'objet testé ;
- une phase de vidage IV, pendant laquelle le volume caractéristique mis sous pression de l'objet testé est ramené à pression atmosphérique.

On notera que la détection de fuites peut également être réalisée en vide (ou en dépression), c'est-à-dire qu'au lieu d'augmenter la pression lors de première phase I, la pression régnant dans le volume caractéristique de l'objet à tester est abaissée jusqu'au une valeur prédéterminée. Les phases II et III restent inchangées. Tandis que la quatrième phase (ou phase IV) consiste à augmenter la pression régnant dans l'objet testé jusqu'à une valeur de pression correspondant à la pression atmosphérique. On peut donc considérer qu'il y a « interversion » des phases I et IV de remplissage et de vidage entre les procédures de détection de fuites en pression et en vide.

L'invention, qui est une méthode de détection de fuites par variation de pression au moyen du dispositif 1, s'inscrit donc avantageusement dans une ou plusieurs phases d'une détection de fuites illustrée à la [Fig.2], notamment au niveau des phases stabilisation II et/ou de test III , l'un des buts de l'invention étant de réduire le temps de stabilisation et pouvoir opérer une détection de fuites le plus rapidement possible (en réduisant le temps de test).

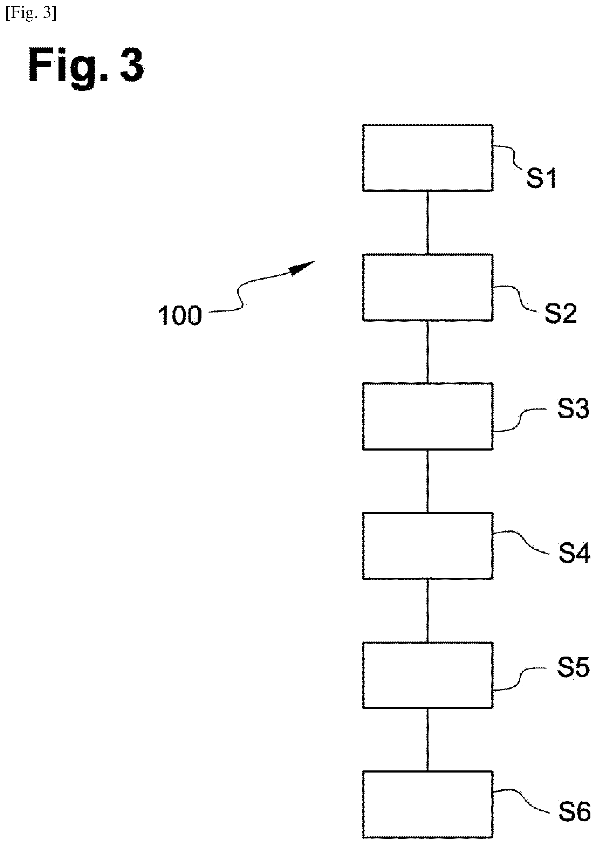

Ladite méthode selon l'invention, plus particulièrement illustrée à la [Fig.3], comporte ainsi les étapes suivantes :

- relier S1 l'objet 10 à tester au dispositif 1 de détection de fuites ;
- faire varier la pression S2 dans au moins une partie de l'objet testé ou dans une enceinte entourant l'objet 10 à tester ;
- mesurer une grandeur physique S3 liée au niveau de fuite F dans ladite au moins une partie de l'objet 10 testé ou dans une enceinte entourant l'objet à tester durant une étape de test, ceci correspondant à un signal de mesure M(t) ;
- appliquer S4 une fonction de modélisation A(t) contenant au moins une composante exponentielle de la forme $e^{-t/\tau}$, ou au moins une fonction approximant ladite au moins une composante exponentielle de la forme $e^{-t/\tau}$, au signal de mesure M(t), où t est le temps et $\tau$ une constante de temps caractéristique ;
- calculer S5 les valeurs des composantes de la fonction de modélisation A(t) ;
- déterminer S6 le niveau de fuite F dans l'objet testé en fonction des composantes de la fonction de modélisation A(t) et d'au moins une variation par rapport au temps du signal de mesure M(t).

On notera que le signal de mesure M(t) peut être une grandeur homogène à une pression, à un débit ou à une pression par unité de temps (notamment la variation de pression par unité de temps).

Selon des variantes de réalisation non représentées, le signal de mesure M(t) est obtenu par l'intermédiaire d'un dispositif de détection de fuites adéquat, c'est-à-dire configuré pour mesurer ces grandeurs et comprenant par exemple un capteur de pression, un débitmètre, etc.

Par ailleurs, on notera qu'on entend par « variation par rapport au temps », une dérivée, la corde ou tout filtrage dérivateur.

Par ailleurs, dans une variante de réalisation, ladite composante exponentielle de la forme $e^{-t/\tau}$ peut également être une fonction d'approximation qui approxime, sur un intervalle de temps pertinent, ladite composante exponentielle.

Plus particulièrement, la fonction d'approximation peut se présenter sous forme d'une série du type

$$\sum_{n=0}^{+\infty} \frac{1}{n!} \left(\frac{-t}{\tau}\right)^n$$

, où n est un entier naturel. Le développement de ce type de série se faisant à l'ordre 2, 3 ou delà en fonction du degré d'erreur acceptable (sur l'approximation réalisée).

Les différentes étapes, phases, calculs et/ou déterminations décrits ci-dessus sont réalisés au moyen de l'entité électronique 15, l'entité 15 gérant notamment l'ouverture et la fermeture des différentes vannes 57 dudit dispositif 1 en conséquence.

La fonction de modélisation A(t) telle que définie comprend au moins une composante du type $Ce^{-t/\tau}$, où C est une constante réelle. La constante C peut être un réel négatif ou positif en fonction de la modélisation et/ou des phénomènes transitoires à prendre en compte lors de l'étape de test.

Dans le cadre d'un premier mode de réalisation non couvert par les revendications, lorsque le signal de mesure M(t) est homogène à une pression, la fonction de modélisation A(t) se présente avantageusement sous la forme : $A(t) = P_i + C(e^{-t/\tau} - 1) - F$ toù $P_i$ est la valeur de la pression initiale, F le niveau de fuite de l'objet testé.

Tandis que dans le cadre d'un deuxième mode de réalisation, lorsque le signal de mesure M(t) est homogène à un débit ou à une pression par unité de temps, la fonction de modélisation A(t) se présente avantageusement sous de la forme : $A(t) = C\,e^{-\frac{t}{\tau}} + F$ où C est une constante réelle, F le niveau de fuite de l'objet testé.

Dans les différents modes de réalisation, la fonction de modélisation A(t) est par exemple appliquée en continu ou par morceaux au signal de mesure M(t) mesuré par le dispositif de détection de fuites 1, l'entité électronique 15 étant configurée pour déterminer la valeur des différentes composantes de la fonction de modélisation A(t) et réaliser toutes les opérations nécessaires pour cela.

Plus particulièrement, lorsque le signal de mesure est homogène à une pression (ou premier mode de réalisation), la fonction de modélisation A(t) et le calcul de ses composantes permet ainsi de déterminer la présence d'une fuite F, le niveau de fuite F étant par exemple fonction du rapport de variations par rapport au temps (telles que des dérivées) du signal de mesure M(t).

Il y a par exemple détermination des composantes de la fonction de modélisation A(t) par variations par rapport au temps (ou dérivation) du signal de mesure M(t) à des temps successifs $\frac{t_0 + t_1}{2}$ et $t_1$ et par le calcul d'un rapport $R(t_1)$ desdites variations, où $t_0$

$$R(t_1) = \frac{M'(t_1) - M'(t_0)}{M'\left(\frac{t_0 + t_1}{2}\right) - M'(t_0)}.$$

Cela permet de déterminer le niveau de fuite F de l'objet 10 testé qui est égal, après simplification, à

$$\frac{C\left(e^{-t_1/\tau} - 1\right) + P_i - M(t_1)}{t_1} \text{ (où } t_1 \text{ est un temps}$$

quelconque lors de l'étape de test).

Selon une variante du premier mode de réalisation, la détermination de la présence d'une fuite, et du niveau de fuite F associé, est fonction de variations par rapport au temps ou de dérivées première, seconde et troisième, respectivement notées M'(t), M"(t) et M"'(t), du signal de mesure M(t). Le niveau de fuite F de l'objet (10) testé est alors égal à $M'(t) - \frac{\left(M''(t)\right)^2}{M'''(t)}$.

Dans le cadre du deuxième de mode de réalisation, c'est-à-dire lorsque le signal de mesure est homogène à un débit ou à une pression par unité de temps, la fonction de modélisation A(t) et le calcul de ses composantes permet également de déterminer la présence d'une fuite F, le niveau de fuite F étant par exemple fonction du rapport $R'(t)$ du signal de mesure M(t) à différents temps.

Il y a par exemple détermination des composantes de la fonction de modélisation A(t) par l'intermédiaire du signal de mesure M(t) à des temps successifs $\frac{t_0 + t_1}{2}$ et $t_1$ et par le calcul d'un rapport R'(t₁), où $t_0$ est un temps initial lors de l'étape de test et $t_1$ est un temps ultérieur à $t_0$, et

$$R'(t_1) = \frac{M(t_1) - M(t_0)}{M\left(\frac{t_0 + t_1}{2}\right) - M(t_0)}.$$

Cela permet de déterminer le niveau de fuite F de l'objet 10 testé qui est égal, après simplification, à

$\frac{M(t_1)}{C} e^{t_1/\tau}$ (où $t_1$ est un temps quelconque lors de l'étape de test).

Selon une variante du deuxième mode de réalisation, la détermination de la présence d'une fuite, et du niveau de fuite F associé, est fonction des variations par rapport au temps ou dérivées première et seconde, respectivement notées M'(t), M"(t), du signal de mesure M(t). Le niveau de fuite F de l'objet (10) testé est alors égal à $M(t) - \frac{\left(M'(t)\right)^2}{M''(t)}$.

Quel que soit le mode de réalisation, la valeur du niveau de fuite F est avantageusement déterminée à partir de plusieurs intervalles de temps du signal de mesure M(t) et de ses dérivées. C'est-à-dire qu'il y a détermination de plusieurs fonctions d'ajustement A(t) successives ou de manière glissante, afin de moyenner et/ou de pouvoir déterminer plusieurs fois les composantes de la fonction de modélisation A(t), ainsi que le niveau de fuite F qui en découle.

Ladite fonction de modélisation A(t) est déterminée pour une période de temps prédéterminé Δt, telle qu'une période de temps comprise entre 500 et 4000 millisecondes (ms).

On notera également que les valeurs des paramètres $\tau$ et A sont avantageusement calculés au préalable et mémorisés, par exemple dans une mémoire de l'entité électronique 15, pour être utilisé lors la détermination de la valeur de la fuite. Cette prédétermination des valeurs des composantes $\tau$ et C peut être réalisée au moyen d'une base de données de mesures passées et/ou de méthodes d'apprentissage, d'optimisation et/ou de régression sur de telles bases de données.

## Revendications

1. Méthode (100) de détection de fuites sur un objet (10) par variation de pression au moyen d'un dispositif (1) de détection de fuites, ladite méthode (100) comportant les étapes suivantes :

   - relier (S1) l'objet (10) à tester au dispositif (1) de détection de fuites ;
   - faire varier la pression (S2) dans au moins une partie de l'objet (10) testé ou dans une enceinte entourant l'objet (10) à tester ;
   - mesurer, dans une étape de test, une grandeur physique (S3) liée au niveau de fuite F dans ladite au moins une partie de l'objet (10) testé ou dans une enceinte entourant l'objet (10) à tester, cette mesure correspondant à un signal de mesure M(t) ;
   - appliquer une fonction de modélisation A(t) (S4) contenant au moins une composante exponentielle de la forme $e^{-t/\tau}$, ou au moins une fonction approximant ladite au moins une composante, au signal de mesure M(t), où t est le temps et $\tau$ une constante de temps caractéristique ;

- déterminer le niveau de fuite F (S6) dans l'objet testé en fonction des composantes de la fonction de modélisation A(t) et d'au moins une variation par rapport au temps du signal de mesure M(t),

**caractérisé en ce que**, lorsque le signal de mesure M(t) est homogène à un débit ou à une pression par unité de temps, la fonction de modélisation A(t) est de la forme :

$$A(t) = C\, e^{-\frac{t}{\tau}} + F$$

où C est une constante réelle et F le niveau de fuite de l'objet testé, et le niveau de fuite F de l'objet (10) testé est égal à $\boxed{\dfrac{M(t_1)}{C}\, e^{t_1/\tau}}$, où $t_1$ est un temps ultérieur à $t_0$.

2. Méthode (100) selon la revendication précédente, **caractérisée en ce qu'**il y a calcul des valeurs ($S_5$) des composantes de la fonction de modélisation A(t).

3. Méthode (100) selon l'une quelconque des revendications précédentes, **caractérisée en ce que** la fonction de modélisation A(t) comprend au moins une composante du type $Ce^{-t/\tau}$, où C est une constante réelle.

4. Méthode (100) selon la revendication 3, **caractérisée en ce que** les valeurs des composantes $\tau$ et C de la fonction de modélisation A(t) sont calculées ou prédéterminées au préalable, puis mémorisées pour être utilisées lors la détermination du niveau de fuite F.

5. Méthode (100) selon la revendication 4, **caractérisée en ce que** le niveau de fuite F de l'objet (10) testé est égal à $\boxed{M'(t) - \dfrac{(M''(t))^2}{M'''(t)}}$.

6. Méthode (100) selon la revendication précédente, **caractérisée en ce que**, lorsque le signal de mesure est homogène à un débit ou à une pression par unité de temps, il y a détermination des composantes de la fonction de modélisation A(t) par l'intermédiaire du signal de mesure M(t) à des temps successifs $\boxed{\dfrac{t_0+t_1}{2}}$

et $t_1$ et par le calcul d'un rapport R'($t_1$), où $t_0$ est un temps initial lors de l'étape de test et $t_1$ est un temps ultérieur à $t_O$, et $\boxed{R'(t_1) = \dfrac{M(t_1) - M(t_0)}{M\left(\frac{t_0+t_1}{2}\right) - M(t_0)}}$.

7. Méthode (100) selon la revendication 5, **caractérisée en ce que** le niveau de fuite F de l'objet (10) testé est égal à $\boxed{M(t) - \dfrac{(M'(t))^2}{M''(t)}}$.

8. Méthode (100) selon l'une quelconque des revendications précédentes, **caractérisée en ce que** la détermination du niveau de fuite F est fonction du rapport de variations par rapport au temps, telles que des dérivées, du signal de mesure M(t).

9. Méthode (100) selon l'une quelconque des revendications précédentes, **caractérisée en ce que** la valeur du niveau de fuite F est la moyenne de plusieurs valeurs du signal de mesure M(t) et/ou de ses variations par rapport au temps.

10. Méthode (100) selon l'une quelconque des revendications précédentes, **caractérisée en ce que** ladite fonction de modélisation A(t) est déterminée pour une période prédéterminée de temps $\Delta$t, avantageusement pour une période de temps $\Delta$t comprise entre 500 et 4000 millisecondes.

11. Dispositif de détection de fuites configuré pour mettre en œuvre la méthode de détection de fuites selon l'une quelconque des revendications 1 à 10.

**Patentansprüche**

1. Verfahren (100) zum Erkennen von Leckagen an einem Objekt (10) durch Druckänderung mittels einer Leckageerkennungsvorrichtung (1), wobei das Verfahren (100) die folgenden Schritte umfasst:

- Verbinden (S1) des zu prüfenden Objekts (10) mit der Leckageerkennungsvorrichtung (1);
- Variieren des Drucks (S2) in mindestens einem Teil des Prüfobjekts (10) oder in einem das zu prüfende Objekt (10) umgebenden Gehäuse;
- Messen, in einem Prüfschritt, einer physikalischen Größe (S3), die mit der Leckrate F in dem mindestens einen Teil des Prüfobjekts (10) oder in einem das zu prüfende Objekt (10) umgebenden Gehäuse verbunden ist, wobei diese Messung einem Messsignal M(t) entspricht;
- Anwenden einer Modellierungsfunktion A(t) (S4), die mindestens eine exponentielle Komponente der Form $e^{-t/\tau}$ enthält, oder mindestens

eine Funktion, die die mindestens eine Komponente approximiert, auf das Messsignal M(t), wobei t die Zeit und $\tau$ eine charakteristische Zeitkonstante ist;

- Bestimmen der Leckrate F (S6) im Prüfobjekt in Abhängigkeit von den Komponenten der Modellierungsfunktion A(t) und mindestens einer zeitlichen Änderung des Messsignals M(t), **dadurch gekennzeichnet, dass**, wenn das Messsignal M(t) homogen zu einer Durchflussrate oder einem Druck pro Zeiteinheit ist, die Modellierungsfunktion A(t) die folgende Form hat:

$$A(t) = C\,e^{-\frac{t}{\tau}} + F$$

wobei C eine reelle Konstante ist und F die Leckrate des Prüfobjekts ist, und die Leckrate F des Prüfobjekts (10) gleich $\frac{M(t_1)}{C}\,e^{t_1/\tau}$ ist, wobei $t_1$ ein Zeitpunkt nach $t_0$ ist.

2. Verfahren (100) nach dem vorhergehenden Anspruch, **dadurch gekennzeichnet, dass** die Werte (S5) der Komponenten der Modellierungsfunktion A(t) berechnet werden.

3. Verfahren (100) nach einem der vorhergehenden Ansprüche, **dadurch gekennzeichnet, dass** die Modellierungsfunktion A(t) mindestens eine Komponente des Typs $C\,e^{-t/\tau}$ umfasst, wobei C eine reelle Konstante ist.

4. Verfahren (100) nach dem Anspruch 3, **dadurch gekennzeichnet, dass** die Werte der Komponenten $\tau$ und C der Modellierungsfunktion A(t) vorher berechnet oder vorbestimmt und dann gespeichert werden, um bei der Bestimmung der Leckrate F verwendet zu werden.

5. Verfahren (100) nach dem Anspruch 4, **dadurch gekennzeichnet, dass** die Leckrate F des Prüfobjekts (10) gleich $M'(t) - \frac{(M''(t))^2}{M'''(t)}$ ist.

6. Verfahren (100) nach dem vorhergehenden Anspruch, **dadurch gekennzeichnet, dass**, wenn das Messsignal homogen zu einer Durchflussrate oder einem Druck pro Zeiteinheit ist, die Komponenten der Modellierungsfunktion A(t) durch das Messsignal M(t) zu aufeinanderfolgenden Zeitpunkten $\frac{t_0+t_1}{2}$ und $t_1$ und durch die Berechnung eines Verhältnisses R'($t_1$) bestimmt werden, wobei $t_0$ ein Anfangszeitpunkt während des Prüfschritts ist und $t_1$

ein Zeitpunkt nach $t_0$ ist, und

$$R'(t_1) = \frac{M(t_1) - M(t_0)}{M(\frac{t_0+t_1}{2}) - M(t_0)}\,.$$

7. Verfahren (100) nach dem Anspruch 5, **dadurch gekennzeichnet, dass** die Leckrate F des Prüfobjekts (10) gleich $M(t) - \frac{M'(t)^2}{M''(t)}$ ist.

8. Verfahren (100) nach einem der vorhergehenden Ansprüche, **dadurch gekennzeichnet, dass** die Bestimmung der Leckrate F in Abhängigkeit vom Verhältnis der zeitlichen Änderungen, wie Ableitungen, des Messsignals M(t) erfolgt.

9. Verfahren (100) nach einem der vorhergehenden Ansprüche, **dadurch gekennzeichnet, dass** der Wert der Leckrate F der Durchschnitt mehrerer Werte des Messsignals M(t) und/oder seiner zeitlichen Änderungen ist.

10. Verfahren (100) nach einem der vorhergehenden Ansprüche, **dadurch gekennzeichnet, dass** die Modellierungsfunktion A(t) für einen vorbestimmten Zeitraum $\Delta t$ bestimmt wird, vorteilhafterweise für einen Zeitraum $\Delta t$ von 500 bis 4000 Millisekunden.

11. Leckageerkennungsvorrichtung, die konfiguriert ist, um das Verfahren zur Leckageerkennung nach einem der Ansprüche 1 bis 10 umzusetzen.

## Claims

1. Method (100) for detecting leaks on an object (10) by pressure variation via a leak detection device (1), said method (100) including the following steps:

   - connecting (S1) the object (10) to be tested to the leak detection device (1);
   - varying the pressure (S2) in at least a part of the tested object (10) or in a chamber surrounding the object (10) to be tested;
   - measuring, in a test step, a physical quantity (S3) related to the level of leakage F in said at least a part of the object (10) tested or in a chamber surrounding the object (10) to be tested, this measurement corresponding to a measurement signal M(t);
   - applying a modelling function A(t) (S4) containing at least one exponential component having the form $e^{-t/\tau}$, or at least one function approximating said at least one component, to the measurement signal M(t), where t is the time and $\tau$ a characteristic time constant;
   - determining the leakage level F (S6) in the tested object as a function of the components of the modelling function A(t) and of at least one variation of the measurement signal M(t) over time,

**characterised in that**, when the measurement signal M(t) is homogeneous at a flow rate or at a pressure per unit of time, the modelling function A(t) has the form:

$$A(t) = C\,e^{\frac{t}{\tau}} + F$$

where C is a real constant and F is the leakage level of the tested object, and the leakage level F of the tested object (10) is equal to

$\frac{M(t_1)}{C}\,e^{t_1/\tau}$ , where $t_1$ is a time after $t_0$.

2. Method (100) according to the preceding claim, **characterised in that** there is calculation of the values (S5) of the components of the modelling function A(t).

3. Method (100) according to any one of the preceding claims, **characterised in that** the modelling function A(t) comprises at least one component of the type $C\,e^{-t/\tau}$, where C is a real constant.

4. Method (100) according to claim 3, **characterised in that** the values of the components $\tau$ and C of the modelling function A(t) are calculated or predetermined in advance, then stored for use in determining the leakage level F.

5. Method (100) according to claim 4, **characterised in that** the level of leakage F of the tested object (10) is

equal to $M'(t) - \frac{(M''(t))^2}{M'''(t)}$ .

6. Method (100) according to the preceding claim, **characterised in that**, when the measurement signal is homogeneous at a flow rate or at a pressure per unit of time, there is a determination of the components of the modelling function A(t) via the measurement signal M(t) at successive times $\frac{t_0+t_1}{2}$ and $t_1$ and by calculating a ratio $R'(t_1)$, where $t_0$ is an initial time during the test step and $t_1$ is a time after $t_0$, and

$$R'(t_1) = \frac{M(t_1) - M(t_0)}{M(\frac{t_0+t_1}{2}) - M(t_0)} .$$

7. Method (100) according to claim 5, **characterised in that** the level of leakage F of the tested object (10) is

equal to $M(t) - \frac{M'(t)^2}{M''(t)}$ .

8. Method (100) according to any one of the preceding claims, **characterised in that** the determination of the leakage level F is a function of the ratio of variations over time, such as derivatives, of the measurement signal M(t).

9. Method (100) according to any one of the preceding claims, **characterised in that** the value of the leakage level F is the average of several values of the measurement signal M(t) and/or of its variations over time.

10. Method (100) according to any one of the preceding claims, **characterised in that** said modelling function A(t) is determined for a predetermined period of time $\Delta t$, advantageously for a period of time $\Delta t$ between 500 and 4000 milliseconds.

11. Leak detection device configured to implement the leak detection method according to any one of claims 1 to 10.

[Fig. 1]

**Fig. 1**

[Fig. 2]

# Fig. 2

[Fig. 3]

# Fig. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2017254719 A
- EP 2801716 A
- US 6182501 B
- WO 2010134622 A
- DE 102015226360